# EUROPÄISCHE PATENTSCHRIFT

(11) **EP 4 124 227 B1**
(45) Veröffentlichungstag und Bekanntmachung des Hinweises auf die Patenterteilung: **23.07.2025**
(21) Anmeldenummer: 22000184.6
(22) Anmeldetag: 20.07.2022
(51) Int. Cl.: A01C 7/08, A01C 23/00, F16K 25/00, F16K 27/02, F16K 7/07

(54) **QUETSCHVENTIL, VERTEILERVORRICHTUNG FÜR EIN GÜLLEAUSBRINGFAHRZEUG AUFWEISEND EIN QUETSCHVENTIL UND VERWENDUNG EINES QUETSCHVENTILS**
PINCH VALVE, DISTRIBUTOR DEVICE FOR A LIQUID MANURE spreading VEHICLE, COMPRISING A PINCH VALVE AND USE OF A PINCH VALVE
Vanne à pincement , DISPOSITIF DISTRIBUTEUR POUR UN VÉHICULE d'épandage de lisier COMPORTANT UN Vanne à pincement ET UTILISATION D'UN Vanne à pincement

(30) Priorität: 27.07.2021 DE 102021003875
(43) Veröffentlichungstag der Anmeldung: 01.02.2023
(73) Patentinhaber: Zunhammer, Sebastian, 83301 Traunreut (DE)
(72) Erfinder: Zunhammer, Sebastian, 83301 Traunreut (DE)
(74) Vertreter: Einsiedler, Johannes

(56) Entgegenhaltungen:
- DE-U1- 20 217 464
- ROSS ET AL: "Quetschventile", 30 November 2019 (2019-11-30), XP093008633, Retrieved from the Internet <URL:https://www.rosseuropa.com/fileadmin/redaktion/de/dokumentation/kataloge-broschueren/pdf/2019-11-26_CAT_Quetschventile.pdf> [retrieved on 20221215]

## Beschreibung

Die Erfindung betrifft ein pneumatisches Quetschventil für eine Verteilervorrichtung für Gülle mit einem zylinderförmigen Gehäuse und einem schlauchförmigen Absperrelement, das in einem zylinderförmigen Gehäuse mit einem Anschlussstutzen für eine Druckluftzuführung angeordnet ist. Die Erfindung betrifft zudem eine Verteilervorrichtung für Gülleausbringfahrzeug mit zumindest einem Quetschventil.

Pneumatische Quetschventile sind hinlänglich im Stand der Technik für das Absperren und Regeln bzw. Dosieren von abrasiven, korrosiven und fasrigen Produkten wie Granulaten, Pulver, Pellets, Stäuben und feststoffhaltigen Flüssigkeiten, wie beispielsweise Gülle bekannt. Indem das Gehäuse des Ventils, das in der Regel einen Anschlussstutzen für eine Druckluftzuführung aufweist, mit Druckluft oder einem anderen einem neutralen Gas beaufschlagt wird, verformt sich ein elastisches Absperrelement lippenförmig und sperrt so den Produktstrom ab. Wird das Ventilgehäuse durch Entlüftung freigegeben, öffnet sich das Absperrelement durch den Druck des Produktstroms und/oder durch eine dem Absperrelement innenwohnende Rückstellkraft wieder bis zum vollen Durchgang.

Derartige Ventile sind beispielsweise aus den Druckschriften DE 202 17 464 U1 und Ross ET AL: "Quetschventile", 30. November 2019 (2019-11-30), XP093008633, bekannt.

Die DE 10 2013 214 639 A1 offenbart ein Quetschventil, das insbesondere für trübe Flüssigkeiten wie Gülle oder Abwasser verwendet wird. Der Quetschschlauch des Quetschventils ist um den Leitungsschlauch gewickelt. Durch Beaufschlagen des Quetschschlauches mit Druck, beispielsweise mit Luftdruck oder Hydrauliköl, quetscht der Quetschschlauch den Leitungsschlauch zusammen und reduziert somit den Durchmesser des Leitungsschlauches. Als nachteilig an diesem Quetschventil erweist sich der hohe konstruktive Aufwand und die Anfälligkeit für Verstopfungen.

Die DE 298 22 642 U1 offenbart ein Quetschventil mit einem rohrförmigen Gehäuse, in dem eine schlauchförmige Quetschventilmanschette angeordnet ist, die von an den Stirnseiten des Gehäuses vorhandenen Endstücken in dem Gehäuse fixiert ist. Nachteilig an dieser Art der Quetschventilgattung ist die aufwendige Montage und nachlassende Dichtigkeit im Dauerbetrieb.

Aufgabe der vorliegenden Erfindung ist es ein pneumatisches Quetschventil anzugeben, das konstruktiv einfach ausgebildet und somit kostengünstig in der Herstellung ist, wartungsarm und zuverlässig betrieben sowie einfach ausgetauscht werden kann, und insbesondere ein zuverlässiges Absperren ohne Nachtropfen gewährleistet.

Zur Lösung der Aufgabe schlägt die Erfindung ein Quetschventil nach dem Oberbegriff von Patentanspruch 1 vor, dass dadurch gekennzeichnet ist, dass ein Absperrelement aus einem elastischen, zumindest abschnittsweise ein Gewebe aufweisenden Schlauch mit einer Shore-Härte von 40 bis 60 gebildet ist, und dass ein Gehäuse aus einem elastischen Kunststoff mit einer Shore Härte von 75 bis 95 gebildet ist und dass in dem Gehäuse zwei diametral angeordnete, bauchförmige Erweiterungen zur, Aufnahme des gequetschten Absperrelements ausgebildet sind.

Die Shore-Härte ist eine Kennzahl, die vorwiegend für Elastomere und gummielastische Polymere eingesetzt wird. Sie steht in direkter Beziehung zur Eindringtiefe und ist somit ein Maß für die Werkstoffhärte. Als Eindringkörper (Indenter) wird ein federbelasteter Stift aus gehärtetem Stahl verwendet. Bei diesen Verfahren wird der jeweilige Indenter mit einer Federkraft in den Prüfkörper gedrückt und die Eindringtiefe stellt somit ein Maß für die Shore-Härte dar.

Für den erfindungsgemäßen Schlauch wie auch für das erfindungsgemäße Gehäuse wurden die Shore-Härten mit einem Durometer vom Typ A gemäß der DIN ISO 48-4 bestimmt. Hierbei wird ein Prüfgewicht von 1 kg für 15 s auf den Werkstoff gedrückt. Der Intender besitzt hierfür eine flache Spitze mit 0,79 mm Durchmesser bei einem Öffnungswinkel von 35° (vgl. DIN ISO 48-4:2021-02).

Überraschenderweise wurde gefunden, dass ein Absperrelement, das aus einem zumindest abschnittsweise ein Gewebe aufweisenden elastischen Schlauch mit einer Shore-Härte von 40 bis 60, bevorzugt 40 bis 50 eine ideale Rückstellkraft aufweist. In Verbindung mit der bevorzugten Verwendung bzw. des bevorzugten Einsatzes des Quetschventils als Gülleabsperrventil öffnet sich das Absperrelement durch den Druck des Güllestroms und der oben genannten Rückstellkraft zuverlässig zum vollen Durchgang.

Der Schlauch ist aus Naturgummi, Silikon oder einem geeigneten Kunststoff, wie Ethylen-Propylen-Dien-Kautschuk, Fluor-Kautschuk, Chloropren-Kautschuk oder anderen Kunststoffen, wie z.B. chlorsulfoniertes Polyethylen, gebildet. In einer bevorzugten Ausführungsform ist der elastische Schlauch ein Gewebeschlauch. Das Gewebe ist vorzugsweise in den Schlauch eingegossen.

Erfindungsgemäß weist das zylinderförmige, aus einem elastischen Kunststoff gebildete Gehäuse zwei diametral angeordnete, bauchförmige Erweiterungen auf, die in vorteilhafterweise das nach einer Druckbeaufschlagung des Gehäuses lippenförmig verformte Absperrelement aufnehmen. Dies ermöglicht eine zuverlässige Absperrung des Produkt-, insbesondere Güllestroms, ohne Nachtropfen. Der Anschlussstutzen für die Druckluft ist vorzugsweise oberhalb einer bauchförmigen Erweiterung angeordnet. In vorteilhafterweise ist dadurch der Einbau in und die Anschlussmöglichkeit an eine Druckluftleitung in einer Verteilervorrichtung für Gülle vereinfacht.

Zudem hat sich eine Shore-Härte von 75 bis 95, bevorzugt 75 bis 85 für das zylinderförmige Gehäuse als vorteilhaft erwiesen, da hierdurch ein jeweils am oberen und unteren Ende des Absperrelements eingeschobener formstabiler Rohrleitungsabschnitt über einfache über das Gehäuse angelegte Fixiermittel, wie beispielsweise Schlauchschellen, befestigt werden kann. Über genannte Rohrleitungsabschnitte wird naturgemäß der Zu- und Ablauf des Quetschventils bzw. eine Anbindung an eine Zu- und eine Ableitung erreicht. Derartige Rohrleitungsabschnitte befinden sich beispielsweise in einer Verteilervorrichtung für Gülle. In einer bevorzugten Ausführungsform ist das Gehäuse aus Polyurethan gebildet, da dieser Werkstoff langlebig und hoch belastbar ist.

Durch die Kombination der beiden in das Absperrelemnet eingeschobenen, vorzugsweise starren Rohrleitungsabschnitte, dem elastischen Gehäuse mit der genannten Shore-Härte und den am oberen und unteren Rand angelegten Fixiermitteln wird zuverlässig und konstruktiv einfach ein luftdruckdichter Gehäuseinnenraum geschaffen. In einer bevorzugten Ausführungsform weist das Gehäuse am oberen und unteren Rand Hinterschneidungen zur Aufnahme der Fixiermittel auf.

Der erfindungsgemäße Erfolg des Quetschventils für eine Verteilervorrichtung für Gülle gegenüber dem Stand der Technik, nämlich ein zuverlässiges Schließen ohne Nachtropfen und zuverlässiges Öffnen durch den typischen Gülledruck in der Verteilervorrichtung, sowie die hohe Dichtigkeit und einfache Austauschbarkeit ist nur durch eine Kombination der beanspruchten Shore-Härten für Absperrelement und Gehäuse erzielbar.

Das erfindungsgemäße Quetschventil wird in vorteilhafterweise in einer Verteilervorrichtung, wie beispielsweise Düsen-, Schleppschlauch- oder Bodeninjektions-Verteilervorrichtung für ein Gülleausbringfahrzeug verwendet.

Ein Gülleausbringfahrzeug umfasst im Allgemeinen einen Tank für Gülle, mindestens ein Fördermittel zum Fördern der Gülle und eine Vielzahl von Gülleauslässen, wie beispielsweise Schleppschuh- oder Schleppschlauchauslässe zum Ausbringen der Gülle auf eine landwirtschaftliche Nutzfläche.

Durch die Fördermittel wird die Gülle über eine Leitung aus dem Tank gefördert, mit Druck beaufschlagt, zu einem Verteilerkopf für eine Querverteilung, beispielsweise einem Verteilerkopf mit Lochscheiben (Exc-Cut Verteilerkopf) oder einer Schnecke (Schneckenverteilerbalken) gefördert. Von diesem Verteilerkopf ausgehend wird die Gülle schließlich über eine Vielzahl weiterer, an einer Verteilervorrichtung angebrachter Leitungen zu den Gülleauslässen gefördert.

Die Fördermittel sind üblicherweise Pumpen, die über ein mechanisches Getriebe von einer Zapfwelle des Fahrzeugs oder eines Zugfahrzeugs angetrieben werden. Über die Auslässe wird die Gülle dann auf die landwirtschaftliche Fläche verteilt.

Die Leitungen zu den Gülleauslässen sind in der Regel an einem oder mehreren Verteilervorrichtungen, die als Seitenausleger beidseitig am Gülleausbringfahrzeug angebracht sind, montiert. Hierdurch lassen sich Arbeitsbreiten von über 20 m erzielen. Die Auslässe sind üblicherweise ca. 25 cm voneinander beabstandet, sodass beispielsweise bei einer Arbeitsbreite von 15 m 60 Leitungen mit Gülleauslässen an der Verteilervorrichtung montiert sind.

Erfindungsgemäß ist demnach vorgesehen, ein Quetschventil in jeder einzelnen zu einem Gülleauslass führenden, an einer Verteilervorrichtung montierten Leitung auszubilden. Damit lässt sich der Güllestrom über die gesamte Arbeitsbreite, abschnittsweise und/oder punktuell ein- oder ausschalten, d.h. absperren.

In vorteilhafterweise kann dadurch, beispielsweise in Abhängigkeit von über die GPS-Technik oder über an der Verteilervorrichtung angeordneten Sensoreinheiten erhältlichen Pflanzenwachstumsdaten, die landwirtschaftliche Fläche abschnittsweise und/oder punktuell gedüngt werden. Zudem ist eine Teilabschaltung des Güllestroms beispielsweise am Flächenrand möglich. Schließlich kann durch die erfindungsgemäße Verteilervorrichtung, in Abhängigkeit der zu düngenden Nutzpflanze beispielsweise nur jeder zweite, dritte etc. Gülleauslass eingeschaltet, d.h. mit einem Güllestrom versorgt werden.

Die Druckbeaufschlagung der einzelnen Quetschventile erfolgt vorzugsweise mit durch die Zugmaschine bereitgestellter Druckluft. Die die Ansteuerung, d.h. die Druckbeaufschlagung der einzelnen Quetschventile erfolgt insbesondere durch eine als Bordcomputer ausgebildete zentrale Rechnereinheit.

In einer bevorzugten Ausführungsform der erfindungsgemäßen Verteilervorrichtung sind die Quetschventile in den Leitungen, ausgehend von dem Verteilerkopf zu den Gülleauslässen in unmittelbarer Nähe des Verteilerkopfs ausgebildet. Dadurch kann der gesamte Leitungsabschnitt ausgehend von dem Verteilerkopf zu dem Gülleauslass im Falle einer Absperrung durch das Quetschventil leerlaufen. In vorteilhafterweise wird dadurch eine Verstopfung durch antrocknende Gülle in dem jeweiligen, abgesperrten Leitungsabschnitt vermieden. Diese Ausführungsform eignet sich insbesondere für feststoffhaltige, dickflüssige Gülle.

In einer weiteren bevorzugten Ausführungsform der erfindungsgemäßen Verteilervorrichtung sind die Quetschventile in den Leitungen, ausgehend von dem Verteilerkopf zu den Gülleauslässen in unmittelbarer Nähe der Auslässe angeordnet. Dadurch wird nach einer Druckbeaufschlagung des Quetschventils eine unmittelbare Absperrung des Güllestroms erzielt. In vorteilhafterweise wird dadurch ein Nachtropfen von noch in dem jeweiligen, abgesperrten Leitungsabschnitt befindlicher Gülle nahezu vermieden. Diese Ausführungsform eignet sich insbesondere für dünnflüssige Gülle.

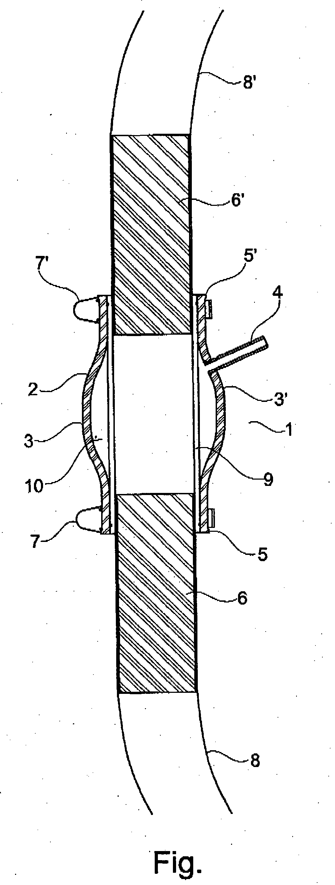

Nachfolgend wird ein Ausführungsbeispiel der Erfindung unter Bezugnahme auf die Zeichnung im Detail erläutert. Dabei zeigt die Figur einen Schnitt A-A durch das erfindungsgemäße Quetschventil.

Das pneumatische Quetschventil (1) umfasst ein zylinderförmiges, aus elastischem Kunststoff mit einer Shore-Härte von 75 bis 95, gebildetes Gehäuse (2) mit zwei diametral angeordneten bauchförmigen Erweiterungen (3, 3'), einem Anschlussstutzen (4) für eine Druckluftzuführung, sowie am oberen und unteren Rand ausgebildete Hinterschneidungen (5, 5') zur Aufnahme von Fixiermitteln. Über zwei starre, in das Absperrelement (9) eingeschobene Rohrleitungsabschnitte (6, 6'), dem elastischen Gehäuse, dem elastischen Absperrelement (9) und den am oberen und unteren Rand angelegten Fixiermitteln (7, 7') wird ein luftdruckdichter Gehäuseinnenraum (10) geschaffen. In einer Verteilervorrichtung für ein Gülleausbringfahrzeug ist das Quetschventil in einem Leitungsabschnitt, einer ausgehend von dem Verteilerkopf zu dem Gülleauslass führenden, in der Regel flexiblen Leitung (8, 8') ausgebildet.

Im Gehäuseinneren befindet sich das Absperrelement (9), das aus einem elastischen, zumindest abschnittsweise ein Gewebe aufweisenden Schlauch mit einer Shore-Härte von 40 bis 60 gebildet wird. Das Absperrelement (9) liegt am oberen und unteren Rand der Innenseite des Gehäuses (2) an. Die beiden starren Rohrleitungsabschnitte (6, 6') sind in das schlauchförmige Absperrelement (9) eingeschoben.

Das erfindungsgemäße Quetschventil erweist sich als kostengünstig und wartungsarm, und kann zudem einfach ausgetauscht werden. Demnach wird das Quetschventil in Verteilervorrichtungen für Gülle verwendet.

### Bezugszeichenliste

- 1: Quetschventil
- 2: Gehäuse
- 3: Erweiterungen
- 4: Anschlussstutzen
- 5: Hinterschneidungen
- 6: Rohrleitungsabschnitte
- 7: Fixiermittel
- 8: Leitung
- 9: Absperrelement
- 10: Gehäuseinnenraum

## Patentansprüche

1. Pneumatisches Quetschventil (1) für eine Verteilervorrichtung für Gülle, mit einem zylinderförmigen Gehäuse (2) und einem schlauchförmigen Absperrelement (9), das in dem zylinderförmigen Gehäuse (2) mit einem Anschlussstutzen (4) für eine Druckluftzuführung angeordnet ist, **dadurch gekennzeichnet, dass** das Absperrelement (9) aus einem elastischen, zumindest abschnittsweise ein Gewebe aufweisenden Schlauch mit einer Shore-Härte von 40 bis 60 gebildet ist, und dass das Gehäuse (2) aus einem elastischen Kunststoff mit einer Shore-Härte von 75 bis 95 gebildet ist, und dass in dem Gehäuse (2) zwei diametral angeordnete, bauchförmige Erweiterungen (3, 3') zur Aufnahme des gequetschten Absperrelements (9) ausgebildet sind.

2. Quetschventil nach Anspruch 1, **dadurch gekennzeichnet, dass** der Anschlussstutzen (4) für die Druckluft oberhalb einer bauchförmigen Erweiterung (3, 3') angeordnet ist.

3. Quetschventil nach einem der vorhergehenden Ansprüche, **dadurch gekennzeichnet, dass** das Gehäuse (2) am oberen und unteren Rand Hinterschneidungen (5, 5') zur Aufnahme von Fixiermitteln (7, 7') aufweist.

4. Quetschventil nach einem der vorhergehenden Ansprüche, **dadurch gekennzeichnet, dass** das Gehäuse (2) aus Polyurethan gebildet ist.

5. Verteilervorrichtung für ein Gülleausbringfahrzeug mit einer Vielzahl an von einem Verteilerkopf ausgehenden und zu Gülleauslässen führenden angebrachten Leitungen (8, 8'), **dadurch gekennzeichnet, dass** ein Quetschventil (1) nach einem der Ansprüche 1 bis 4 in jeder einzelnen zu einem Gülleauslass führenden Leitung (8, 8') ausgebildet ist.

6. Verteilervorrichtung nach Anspruch 5, **dadurch gekennzeichnet, dass** die Quetschventile (1) in den Leitungen (8, 8'), ausgehend von dem Verteilerkopf zu den Gülleauslässen in unmittelbarer Nähe des Verteilerkopfs ausgebildet sind.

7. Verteilervorrichtung nach Anspruch 5, **dadurch gekennzeichnet, dass** die Quetschventile (1) in den Leitungen (8, 8'), ausgehend von dem Verteilerkopf zu den Gülleauslässen in unmittelbarer Nähe der Gülleauslässe angeordnet sind.

8. Verwendung eines Quetschventils (1) nach einem der Ansprüche 1 bis 4 in Verteilervorrichtungen für Gülle.

## Claims

1. Pneumatic pinch valve (1) for a distributor device for liquid manure, having a cylindrical housing (2) and a hose-shaped shut-off element (9) which is arranged in the cylindrical housing (2) with a connection piece (4) for a compressed air supply, **characterized in that** the shut-off element (9) is formed from an elastic hose which has a Shore hardness of 40 to 60 and has a fabric at least in sections, and **in that** the housing (2) is formed from an elastic plastic with a Shore hardness of 75 to 95, at least in sections comprising a fabric and having a Shore hardness of 40 to 60, and **in that** the housing (2) is formed from an elastic plastic having a Shore hardness of 75 to 95, and **in that** two diametrically arranged, belly-shaped extensions (3, 3') are formed in the housing (2) for receiving the crimped shut-off element (9).

2. Pinch valve according to claim 1, **characterized in that** the connection piece (4) for the compressed air is arranged above a bulbous extension (3, 3').

3. Pinch valve according to one of the preceding claims, **characterized in that** the housing (2) has undercuts (5, 5') at the upper and lower edge for receiving fixing means (7, 7').

4. Pinch valve according to one of the preceding claims, **characterized in that** the housing (2) is made of polyurethane.

5. Distribution device for a liquid manure spreading vehicle with a plurality of attached pipes (8, 8') extending from a distributor head and leading to liquid manure outlets, **characterized in that** a pinch valve (1) according to one of claims 1 to 4 is formed in each individual pipe (8, 8') leading to a liquid manure outlet.

6. Distribution device according to claim 5, **characterized in that** the pinch valves (1) are formed in the pipes (8, 8'), starting from the distributor head to the liquid manure outlets in the immediate vicinity of the distributor head.

7. Distribution device according to claim 5, **characterized in that** the pinch valves (1) are arranged in the pipes (8, 8'), starting from the distributor head to the liquid manure outlets in the immediate vicinity of the liquid manure outlets.

8. Use of a pinch valve (1) according to one of claims 1 to 4 in distribution devices for liquid manure.

## Revendications

1. Vanne à pincement pneumatique (1) pour un dispositif de distribution de lisier, avec un boîtier cylindrique (2) et un élément de blocage (9) en forme de tuyau, qui est disposé dans le boîtier cylindrique (2) avec une tubulure de raccordement (4) pour une alimentation en air comprimé, **caractérisée en ce que** l'élément de blocage (9) est formé d'un tuyau élastique, qui présente au moins par sections un tissu et qui a une dureté Shore de 40 à 60, et **en ce que** le boîtier (2) est formé d'une matière plastique élastique ayant une dureté Shore de 75 à 95, et **en ce que** deux élargissements (3, 3') en forme de ventre, disposés diamétralement, sont formés dans le boîtier (2) pour recevoir l'élément de blocage (9) écrasé.

2. Vanne à pincement selon la revendication 1, **caractérisée en ce que** l'embout de raccordement (4) pour l'air comprimé est disposé au-dessus d'un élargissement (3, 3') en forme de ventre.

3. Vanne à pincement selon l'une des revendications précédentes, **caractérisée en ce que** le corps (2) présente des contre-dépouilles (5, 5') sur les bords supérieur et inférieur pour recevoir des moyens de fixation (7, 7').

4. Vanne à pincement selon l'une quelconque des revendications précédentes, **caractérisée en ce que** le corps (2) est formé de polyuréthane.

5. Dispositif de distribution pour un véhicule d'épandage de lisier comportant une pluralité de conduits (8, 8') montés partant d'une tête de distribution et menant à des sorties de lisier, **caractérisé en ce qu'**un vanne à pincement (1) selon l'une des revendications 1 à 4 est formé dans chaque conduit (8, 8') individuel menant à une sortie de lisier.

6. Dispositif de distribution selon la revendication 5, **caractérisé en ce que** les vannes à pincement (1) sont formés dans les conduits (8, 8') partant de la tête de distribution vers les sorties de lisier à proximité immédiate de la tête de distribution.

7. Dispositif de distribution selon la revendication 5, **caractérisé en ce que** les vannes à pincement (1) sont disposées dans les conduites (8, 8'), en partant de la tête de distribution vers les sorties de lisier, à proximité immédiate des sorties de lisier.

8. Utilisation d'une vanne à pincement (1) selon l'une quelconque des revendications 1 à 4 dans des dispositifs de distribution de lisier.
